# EUROPÄISCHE PATENTSCHRIFT

(11) **EP 1 692 418 B1**
(45) Veröffentlichungstag und Bekanntmachung des Hinweises auf die Patenterteilung: **21.02.2007**
(21) Anmeldenummer: 03795878.2
(22) Anmeldetag: 09.12.2003
(51) Int. Cl.: F16H 61/06, G01L 3/00

(54) **AXIALVERSTELLVORRICHTUNG MIT DREHMOMENTBESTIMMUNG**
AXIAL DISPLACEMENT DEVICE AND METHOD FOR TORQUE DETERMINATION
DISPOSITIF A DEPLACEMENT AXIAL A DETERMINATION DU COUPLE DE ROTATION

(43) Veröffentlichungstag der Anmeldung: 23.08.2006
(73) Patentinhaber: GKN Driveline International GmbH, 53797 Lohmar (DE)
(72) Erfinder: GASSMANN, Theodor, 53721 Siegburg (DE); GRUNWALD, Artur, 51588 Nümbrecht (DE)
(74) Vertreter: Oberwalleney, Stephan
(86) Internationale Anmeldenummer: PCT/EP2003/013928
(87) Internationale Veröffentlichungsnummer: WO 2005/064209

(56) Entgegenhaltungen:
- DE-A- 2 007 083
- DE-A- 19 951 946
- US-A- 4 903 804

## Beschreibung

Die Erfindung betrifft ein Verfahren zur Ermittlung des Kupplungsmomentes in einer Reibungskupplung mit einem elektromechanischen Aktuator, der ein in einem Gehäuse im wesentlichen axial festgelegtes Stützelement und ein sich an diesem abstützendes axial verschiebbares Stellelement umfaßt, sowie eine Reibungskupplung mit einem elektromechanischen Aktuator, insbesondere zur Verwendung in einem sperrbaren Differentialgetriebe oder als Hang-on-Kupplung für eine bedarfsweise antreibbare Antriebsachse eines Kraftfahrzeugs, wobei der Aktuator eine in einem Gehäuse axial festgelegte Stützscheibe und eine sich an dieser axial abstützende Stellscheibe umfaßt. Reibungskupplungen mit dem hiermit genannten Anwendungsgebiet dienen der Drehmomentregelung, d.h. insbesondere dem Eingriff in die Drehmomentverteilung an zwei Rädern einer angetriebenen Achse oder in die Drehmomentverteilung zwischen zwei antreibbaren Achsen. Um entsprechende Regelprozesse führen zu können, muß hierfür das von der Kupplung übertragene Kupplungsmoment bekannt sein, d.h. mit geeigneten Mitteln ständig ermittelt werden. Bei bisherigen Verfahren zur Ermittlung des Kupplungsmoments werden als Meßwerte Drehzahlen, Temperaturen usw. mit Sensoren ermittelt, theoretische Rechenwerte (Übersetzungen, Wirkungsgrade usw.) errechnet sowie durch Versuche ermittelte Korrekturfaktoren (Reibzahlen, Wirkungsgrade, Temperatur- und Drehzahlabhängigkeiten usw.) abgespeichert und die gemessenen, gerechneten und interpolierten Werte in einer Rechner- oder Prozessoreinheit ausgewertet und ein entsprechender Strom zum Erreichen eines berechneten Kupplungsmoments am E-Motor des Aktuators eingestellt. Hiermit liegt eine offene Regelstrecke vor (open-loop).

Die hiermit eingestellten Kupplungsmomente und damit die entsprechenden Drehmomente an den Rädern oder Achsen weichen aufgrund vorhandener Nichtlinearitäten und Abweichungen im Kupplungsverhalten und im Verhalten des Aktuators von den theoretischen physikalischen Werten teilweise stark ab. Die hiermit erreichte Genauigkeit für die Kupplungsmomenteinstellung ist teilweise nicht ausreichend. Das Hinterlegen der hierfür benötigten Auswertungstabellen in einer ECU oder einem Prozessor ist aufwendig und kann das komplette physikalische Modell der Kupplung nicht ausreichend genau abbilden. Für die Auswertung der gemessenen, gerechneten und interpolierten Werte wird Speicher- und Rechnerkapazität der ECU belegt und Zeit benötigt. Für die erforderlichen Meßwerte werden mehrere Sensoren (Drehzahlmessung, Temperatursensoren usw.) benötigt.

Ein Verfahren zur Ermittlung des Kupplungsmomentes mit den Merkmalen des Oberbegriffs des Anspruchs 1 bzw eine Reibungskupplung mit den Merkmalen des Oberbegriffs der Ansprüche 5 und 8 ist bekannt aus US-A-4 903 804.

Hiervon ausgehend liegt der vorliegenden Erfindung die Aufgabe zugrunde, ein Verfahren und eine Reibungskupplung der eingangs genannten Art vorzuschlagen, mit der sich das Kupplungsmoment mit weniger Aufwand und genauer regeln läßt. Die Lösung hierfür besteht in einem Verfahren, das dadurch gekennzeichnet ist, daß das Stützelement über ein unverdrängbar eingeschlossenes hydraulisches Medium in dem Gehäuse axial abgestützt wird und der Druck in dem hydraulischen Medium gemessen wird und unter Verwendung von Wertetabellen für den Aktuator und die Reibungskupplung zur Berechnung des Kupplungsmomentes in einer ECU verwendet wird. Hierbei ist insbesondere vorgesehen, daß die Axialkraft des Aktuators aus dem gemessenen Druck unter Verwendung eines abgespeicherten Wertes für die Wirkfläche des Stützelementes berechnet wird. Weiterhin wird so verfahren, daß das Kupplungsmoment unter Verwendung von abgespeicherten Werten für den Reibwert und die Reibflächen der Kupplung aus der Stützkraft des Stützelements bzw. der Axialkraft des Aktuators berechnet wird.

In bevorzugter Ausführung wird vorgesehen, daß der Druck in einem geschlossenen Regelkreis durch Verstellung des Aktuators auf einen jeweiligen Sollwert geregelt wird. Das heißt also, daß anstelle einer offenen Regelstrecke (open-loop) eine geschlossene Regelstrecke (closed-loop) basierend auf dem Druck als einziger Meß- und Regelgröße gefahren wird.

Auf diese Weise wird also die axiale Stellkraft mittels einer geschlossenen Regelstrecke geregelt, wobei für die Umrechnung aus dem gemessenen Druck in die Axialkraft nur die wirksame Oberfläche der Stützscheibe, die von hydraulischem Medium beaufschlagt ist, bekannt sein und gespeichert werden muß und wobei zur Berechnung des sich daraus ergebenden Kupplungsmoments lediglich die Reibwerte der Kupplungslamellen und der mittlere Kupplungsdurchmesser bekannt sein und in Wertetabellen abgelegt werden muß. Hieraus wird das für einen bestimmten Fahrzustand erforderliche Kupplungsmoment von der ECU (Electronic Control Unit) als Sollwert für die Axialkraft des Aktuators bzw. den Druck umgerechnet und durch Nachregeln des Aktuators direkt mit dem Signal des Drucksensors abgeglichen. Das aus der Axialkraft errechnete Drehmoment kann auf dem Fahrzeug-CAN-Bus zur Verfügung gestellt werden.

Eine erfindungsgemäße Reibungskupplung zeichnet sich nach einer ersten Lösung dadurch aus, daß die Stützscheibe als Ringkolben in einer mit Hydraulikmedium gefüllten Ringkammer ausgebildet ist und in dem Gehäuse ein Drucksensorelement zur Messung des hydraulischen Druckes in der Ringkammer angeordnet ist. Hierbei ist entweder vorzuschlagen, daß das Drucksensorelement an einem zur Ringkammer führenden Stichkanal angeschlossen ist oder es kann vorgesehen sein, daß das Drucksensorelement unmittelbar in der Ringkammer eingelassen ist.

Eine alternative erfindungsgemäße Reibungskupplung zeichnet sich nach einer zweiten Lösung dadurch aus, daß die Stützscheibe als Ringstempel ausgebildet ist und in dem Gehäuse ein Ringgehäuse mit einem Deckel eingesetzt ist, die eine mit Hydraulikmedium gefüllte Ringkammer bilden, in der ein Drucksensorelement zur Messung des hydraulischen Drucks in der Ringkammer angeordnet ist, wobei der Ringstempel auf den Deckel einwirkt. Hierbei ist es möglich, daß der Deckel als das Ringgehäuse abschließende flexible Membran ausgebildet ist. Alternativ kann vorgesehen werden, daß der Deckel in dem Ringgehäuse verschiebbar und gegenüber der Ringkammer abgedichtet ist.

Das hydraulische Medium ist in jedem Fall frei wählbar; um Undichtigkeiten zu vermeiden, wird jedoch vorgeschlagen, ein hydraulisches Medium mit hoher Viskosität, z.B. ein Öl oder ein Gel, zu verwenden. Bevorzugt werden Ringdichtungen zur Abdichtung eingesetzt; hierauf kann verzichtet werden, wenn das hydraulische Medium durch einen elastischen selbsttragenden Formkörper gebildet wird.

Bevorzugte Ausführungsbeispiele der Erfindung sind in den Zeichnungen dargestellt und werden nachstehend beschrieben.
- Figur 1: zeigt eine Lamellenkupplung mit einem elektromechanischen Aktuator mit hydraulischer Abstützung in einer ersten Ausführung;
- Figur 2: zeigt eine Lamellenkupplung mit einem elektromechanischen Aktuator mit hydraulischer Abstützung in einer zweiten Ausführung;
- Figur 3: zeigt eine Lamellenkupplung mit einem elektromechanischen Aktuator mit hydraulischer Abstützung in einer dritten Ausführung;
- Figur 4: das Element zur Druckerfassung nach Figur 3 in vergrößerter Ausführung;
- Figur 5: zeigt eine Lamellenkupplung mit einem elektromechanischen Aktuator mit hydraulischer Abstützung in einer vierten Ausführung.

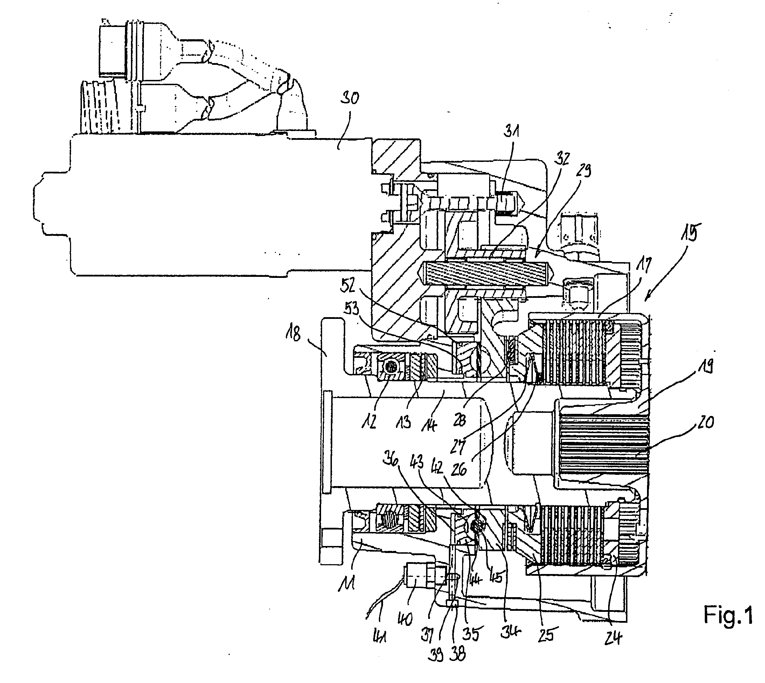

Die Figuren 1 bis 3 und 5 werden zunächst gemeinsam beschrieben, soweit die darin erkennbaren Einzelheiten übereinstimmen. In einem mehrteiligen Gehäuse 11 ist über ein Kugellager 12 und ein Axiallager 13 eine Welle 14 gelagert, die mit einer Lamellenkupplung 15 verbunden ist. Hierbei ist die Welle 14 einstückig mit einer N a-be 16 der Lamellenkupplung ausgeführt, während ein Kupplungskorb 17 der Lamellenkupplung einstückig mit einer weiteren Nabe 19 verbunden ist. Die Welle 14 hat einen Flansch 18 zum Anschluß einer ersten anflanschbaren Welle, die zweite Nabe 19 hat eine Wellenverzahnung 20 zum Anschließen einer zweiten einsteckbaren Welle. Die Lamellenkupplung umfaßt mit der Nabe 16 drehfest verbundene erste Kupplungslamellen 22 und mit dem Korb 17 verbundene zweite Kupplungslamellen 23, die axial abwechselnd angeordnet sind. Das Paket aus ersten und zweiten Kupplungslamellen 22, 23 stützt sich an einer auf der Nabe 16 festgelegten Stützplatte 24 ab und ist von einer axial gegenüber der Nabe 16 verschiebbaren Druckplatte 25 axial beaufschlagbar. Zwischen den Kupplungslamellen 22, 23 und der Druckplatte 25 ist ein Paar Tellerfedern 26, 27 zur Rückstellung der Druckplatte angeordnet. Die Druckplatte 25 wird ihrerseits über ein Axiallager 28 von einer Axialverstellvorrichtung 29 verschoben, die mittels eines E-Motors 30 antreibbar ist. Der Antrieb erfolgt hierbei von der Welle 31 des E-Motors über eine Untersetzungsstufe 32 auf die Axialverstellvorrichtung 29.

In der dargestellten Ausführung besteht die Axialverstellvorrichtung (Aktuator) aus einer über ein Zahnsegment 33 drehend antreibbaren Druck- oder Verstellscheibe 34 und einer im Gehäuse 11 drehfest gehaltenen und axial abgestützten Stützscheibe 35. Die Scheiben 34, 35 weisen auf ihren zueinanderliegenden Stirnflächen Kugelrillen 42, 43 auf, in denen in einem Käfig 44 geführte Kugeln 45 laufen. Die Kugelrillen sind zu mehreren paarweise in Umfangsrichtung verlaufend angeordnet, wobei sie in entgegengesetzter Richtung verlaufende Gradienten bzw. Tiefenänderungen aufweisen. Bei einem drehenden Antrieb der Scheibe 34 relativ zur axial abgestützten und drehgesicherten Scheibe 35 laufen die Kugeln hierbei von tieferen Kugelrillenbereichen zu flachen Kugelrillebereichen, wodurch sich die Scheibe 34 von der Scheibe 35 auf die Lamellenkupplung zu entfernt. Das Kupplungspaket wird geschlossen. Bei entgegengesetztem Antrieb oder bei Stromlossetzen des E-Motors 30 wird durch die Rückstellkraft der Tellerfedern 26, 27 die Scheibe 34 zurückgedrückt und unter der Wirkung der Kugeln 45 in den Kugelrillen 42, 43 zurückgedreht.

In der Ausführung nach Figur 1 ist die Stützscheibe 35 als Ringkolben ausgeführt, der in einer Ringzylinderkammer 36, die mit hydraulischem Medium gefüllt ist, axial frei und verdrehgesichert gehalten ist. Die Scheibe 35 ist mit auf der Kolbenfläche sitzenden Dichtringen 52, 53 gegenüber der Kammer 36 abgedichtet. Von der Kammer 36 geht eine Radialbohrung 37 aus, die mit einem Gewindestopfen 38 verschlossen ist. Die Radialbohrung 37 wird von einer Querbohrung 39 durchsetzt, mit der ein in das Gehäuse eingeschraubtes Drucksensorelement 40 mit integrierter Sensorelektronik in Verbindung steht. Kammer 36, Radialbohrung 37 und Querbohrung 39 sind zu 100 % mit hydraulischem Medium gefüllt, so daß die Scheibe 35 im wesentlichen durch das hydraulische Medium axial fest abgestützt ist. Der Drucksensor 40 mißt den Druck in der Zylinderkammer 36 und leitet über ein Kabel 41 Meßwerte an eine ECU, in der der gemessene Druck in der eingangs beschriebenen Weise in das aktuell übertragbare Kupplungsmoment umgerechnet wird.

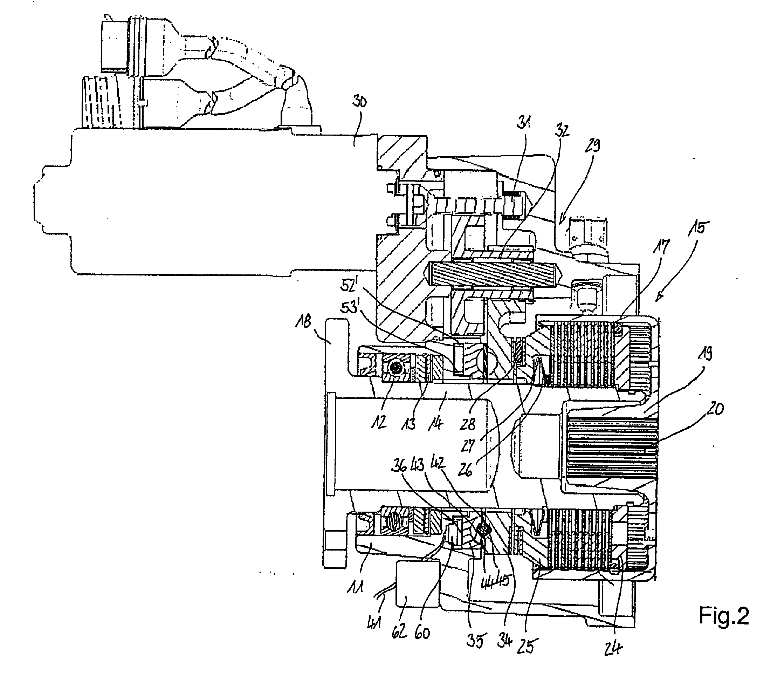

In Figur 2 ist die Stützscheibe 35 als Ringkolben ausgeführt, der in einer Ringzylinderkammer 36, die mit hydraulischem Medium gefüllt ist, axial frei und verdrehgesichert gehalten ist. Die Scheibe 35 ist mit in der Kammer einliegenden Dichtringen 52', 53' gegenüber der Kammer 36 abgedichtet. In der Kammer 36 ist ein in das Gehäuse eingelassenes Drucksensorelement 60 angeordnet. Das Drucksensorelement erfaßt den Druck in der Zylinderkammer 36 und leitet ein Drucksignal an eine am Gehäuse angeordnete Drucksensorelektronik (ECU) 62, in der der gemessene Druck in der eingangs beschriebenen Weise in das aktuelle Kupplungsmoment umgerechnet wird, wobei der errechnete Wert über einen Bus des Kraftfahrzeugs zur Weiterverwendung zur Verfügung gestellt werden kann.

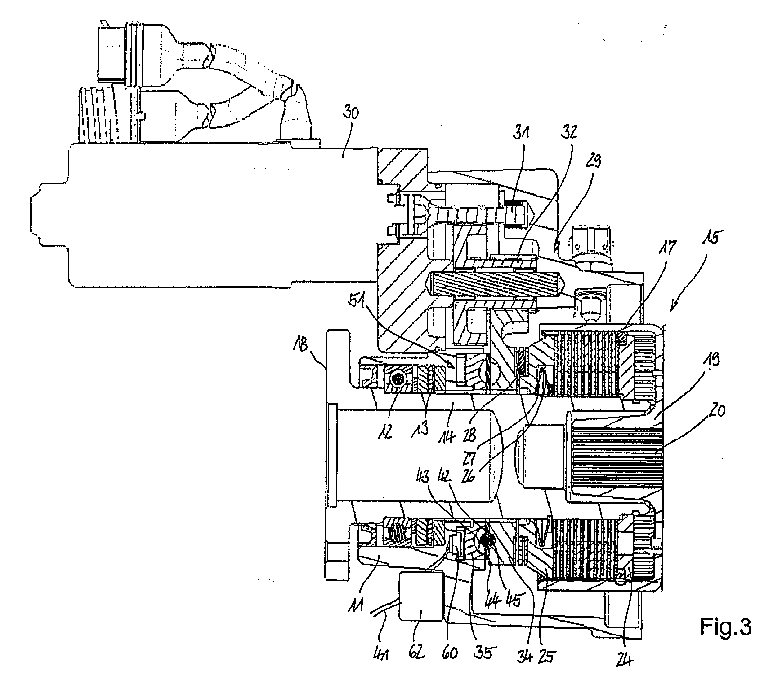

In Figur 3 ist die Stützscheibe 35 als Ringkolben ausgeführt, der in einer Ringzylinderkammer 36, in die ein mit hydraulischem Medium gefülltes Ringgehäuse 51 spielfrei eingesetzt ist, axial frei und verdrehgesichert gehalten ist. Die Scheibe 35 muß hierbei gegenüber der Kammer 36 nicht abgedichtet sein. In das Ringgehäuse 51 ist ein in das Gehäuse eingelassenes Drucksensorelement 60 eingesetzt. Das Drucksensorelement erfaßt den Druck in dem Ringgehäuse 51 und leitet ein Drucksignal an eine am Gehäuse angeordnete Drucksensorelektronik (ECU) 62, in der der gemessene Druck in der eingangs beschriebenen Weise in das aktuelle Kupplungsmoment umgerechnet wird.

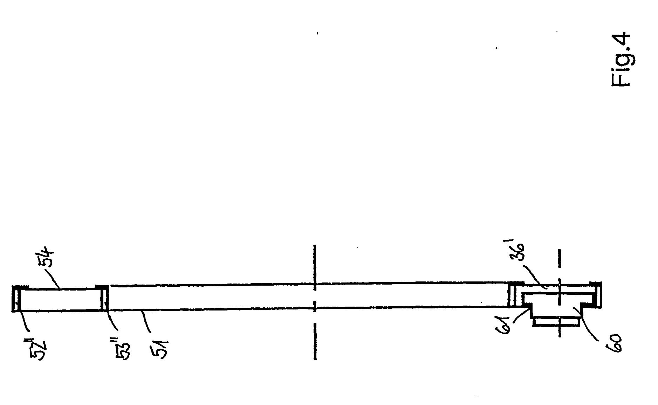

In Figur 4 ist das Ringgehäuse 51 nach Figur 3 in vergrößerter Darstellung als Einzelheit abgebildet. Es ist ein ringförmiges Gehäuse 51 erkennbar, in das am Innenumfang und am Außenumfang Dichtungen 52", 53" eingelegt sind. An einer Stirnseite ist ein flacher Ringdeckel 54 eingelegt, der durch zwei Umbördelungen 55, 56 gegenüber den Dichtungen 52", 53" abdichtend gehalten ist. Das Ringgehäuse 51 ist vollständig mit hydraulischem Medium gefüllt. An einer Umfangsstelle ist ein Drucksensorelement 60 in das Gehäuse 51 eingesetzt, der durch eine Bohrung 61 mit seiner Anschlußseite aus dem Gehäuse herausgeführt ist. Der Deckel 54 ist als elastische Membran oder als durch die Dichtungen 52, 53 ständig abgedichteter verschiebbarer Deckel ausgebildet, auf den die Stützscheibe axial einwirken kann.

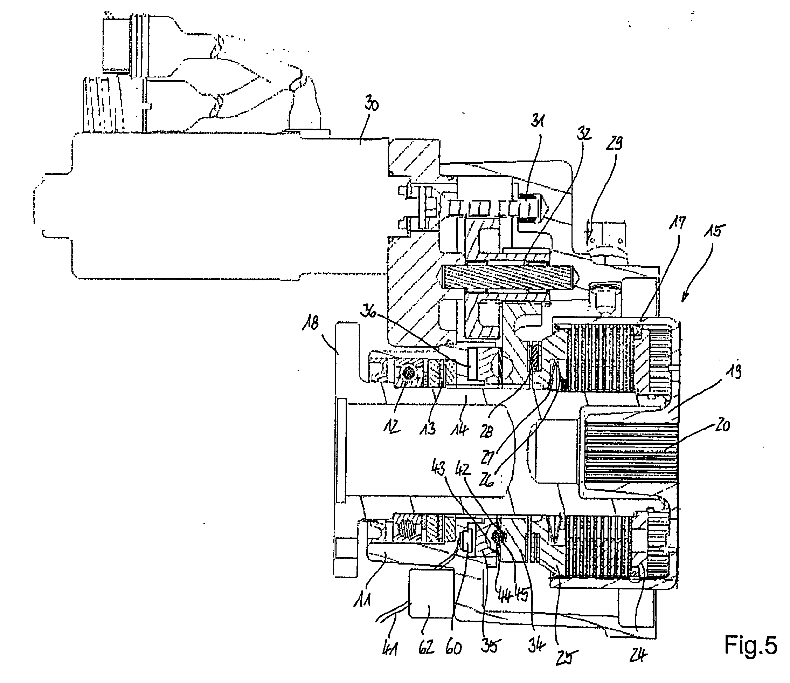

In Figur 5 ist die Stützscheibe 35 als Ringkolben 35 ausgeführt, der in einer Ringkammer 36, die mit hydraulischem Medium gefüllt ist, axial frei und verdrehgesichert gehalten ist. Das hydraulische Medium ist von solcher Konsistenz, daß die Scheibe 35 gegenüber der Kammer 36 nicht abgedichtet sein muß. Beispielsweise kann das hydraulische Medium durch ein Zweikomponentengel dargestellt werden, das flüssig in die Kammer eingefüllt wird und dort geliert. Alternativ kann das hydraulische Medium aus einem vorgefertigten Formkörper bestehen, beispielsweise einer Silikonscheibe. Auch hier ist in der Kammer 36 wieder ein Drucksensorelement 60 eingelassen, das den Druck in der Zylinderkammer 36 erfaßt und ein Drucksignal an eine Drucksensorelektronik überträgt, die am Gehäuse 11 montiert ist. Im übrigen wird auf die vorhergehenden Ausführungen verwiesen.

### Bezugszeichenliste

- 11: Gehäuse
- 12: Kugellager
- 13: Axiallager
- 14: Welle
- 15: Lamellenkupplung
- 16: Kupplungsnabe
- 17: Kupplungskorb
- 18: Flansch
- 19: Nabe
- 20: Wellenanordnung
- 22: Kupplungslamellen
- 23: Kupplungslamellen
- 24: Stützplatte
- 25: Druckplatte
- 26: Tellerfeder
- 27: Tellerfeder
- 28: Axiallager
- 29: Axialverstellvorrichtung (Aktuator)
- 30: E-Motor
- 31: Welle
- 32: Untersetzungsstufe
- 33: Zahnsegment
- 34: Verstellscheibe
- 35: Stützscheibe
- 36: Ringzylinder
- 37: Radialbohrung
- 38: Stopfen
- 39: Querbohrung
- 40: Drucksensorelement mit integrierter Elektronik
- 41: Kabel
- 42: Kugelrille
- 43: Kugelrille
- 44: Käfig
- 45: Kugel
- 51: Ringgehäuse
- 52: Dichtung
- 53: Dichtung
- 54: Deckel
- 55: Bördelung
- 56: Bördelung
- 60: Drucksensorelement
- 61: Bohrung
- 62: Drucksensorelektronik

## Patentansprüche

1. Verfahren zur Ermittlung des Kupptungsmomentes in einer Reibungskupplung (15) mit einem elektromechanischen Aktuator (29), der ein in einem Gehäuse axial abgestütztes Stützelement (35) und ein sich an diesem abstützendes axial verschiebbares Stellelement (34) umfaßt,
**dadurch gekennzeichnet,**
**daß** das Stützelement (35) über ein unverdrängbar eingeschlossenes hydraulisches Medium in dem Gehäuse (11) axial abgestützt wird und der Druck in dem hydraulischen Medium gemessen wird und unter Verwendung von Wertetabellen für den Aktuator und die Reibungskupplung zur Berechnung des Kupplungsmomentes in einer zentralen ECU verwendet wird.

2. Verfahren nach Anspruch 1,
**dadurch gekennzeichnet,**
**daß** die Axialkraft des Aktuators (29) bzw. die Stützkraft des Stützelements (35) aus dem Druck in dem hydraulischen Medium unter Verwendung eines abgespeicherten Wertes für die Wirkfläche des Stützelementes berechnet wird.

3. Verfahren nach Anspruch 2,
**dadurch gekennzeichnet,**
**daß** das Kupplungsmoment unter Verwendung von abgespeicherten Werten für den Reibwert und die Reibfläche der Reibungskupplung (15) aus der Axialkraft des Aktuators (29) bzw. der Stützkraft des Stützelements (35) berechnet wird.

4. Verfahren nach einem der Ansprüche 1 bis 3,
**dadurch gekennzeichnet,**
**daß** der Druck in dem hydraulischen Medium in einem geschlossenen Regelkreis durch Verstellung des Aktuators auf einen jeweiligen Sollwert geregelt wird.

5. Reibungskupplung (15) mit einem elektromechanischen Aktuator (29), insbesondere zur Verwendung in einem sperrbaren Differentialgetriebe oder als Hang-on-Kupplung für eine bedarfsweise antreibbare Antriebsachse eines Kraftfahrzeugs, wobei der Aktuator (29) eine in einem Gehäuse (11) axial festgelegte Stützscheibe (35) und eine sich an dieser axial abstützende verschiebbare Stellscheibe (34) umfaßt,
**dadurch gekennzeichnet,**
**daß** die Stützscheibe (35) als Ringkolben in einer mit Hydraulikmedium gefüllten verschlossenen Ringkammer (36) ausgebildet ist und in dem Gehäuse (11) ein Drucksensorelement (40, 60) zur Messung des hydraulischen Druckes in der Ringkammer (36) angeordnet ist.

6. Kupplung nach Anspruch 5,
**dadurch gekennzeichnet,**
**daß** das Drucksensorelement (40) an einem zur Ringkammer (36) führenden Stichkanal (37, 39) angeschlossen ist.

7. Kupplung nach Anspruch 5,
**dadurch gekennzeichnet,**
**daß** das Drucksensorelement (60) unmittelbar in der Ringkammer (36) eingelassen ist.

8. Reibungskupplung (15) mit einem elektromechanischen Aktuator (29), insbesondere zur Verwendung in einem sperrbaren Differentialgetriebe oder als Hang-on-Kupplung für eine bedarfsweise antreibbare Antriebsachse eines Kraftfahrzeugs, wobei der Aktuator eine in einem Gehäuse axial festgelegte Stützscheibe (35) und eine sich an dieser axial abstützende verschiebbare Stellscheibe (34) umfaßt,
**dadurch gekennzeichnet,**
**daß** die Stützscheibe (35) als Ringstempel ausgebildet ist und in dem Gehäuse (11) ein Ringgehäuse (51) mit einem Deckel (54) eingesetzt ist, die eine mit Hydraulikmedium gefüllte verschlossene Ringkammer (36') bilden, in der ein Drucksensorelement (60) zur Messung des hydraulischen Drucks in der Ringkammer (36') angeordnet ist, wobei der Ringstempel auf den Deckel (54) einwirkt.

9. Kupplung nach Anspruch 7,
**dadurch gekennzeichnet,**
**daß** der Deckel (54) als flexible Membran ausgebildet ist.

10. Kupplung nach Anspruch 7,
**dadurch gekennzeichnet,**
**daß** der Deckel (54) in der Ringkammer (36') verschiebbar und gegenüber dieser abgedichtet ist.

11. Kupplung nach einem der Ansprüche 5 bis 10,
**dadurch gekennzeichnet,**
**daß** die Stützscheibe (35) gegenüber der Ringkammer (36) bzw. der Deckel (54) gegenüber der Ringkammer (36') mittels Dichtringen (52, 53) abgedichtet ist.

12. Kupplung nach einem der Ansprüche 5 bis 11,
**dadurch gekennzeichnet,**
**daß** das hydraulische Medium einen elastischen Formkörper bildet.

## Claims

1. A method of determining the coupling moment in a friction coupling (15) having an electro-mechanical actuator (29) which comprises a supporting element (35) axially supported in a housing and an axially displaceable setting element (34) supported on said supporting element (35),
**characterised in**
**that** the supporting element (35) is axially supported in the housing (11) via an undisplaceably enclosed hydraulic medium and that the pressure is measured in the hydraulic medium and is used with the help of value tables for the actuator and the friction coupling for calculating the coupling moment in a central ECU.

2. A method according to claim 1,
**characterised in**
**that** the axial force of the actuator (29) and the supporting force of the supporting element (35) respectively are calculated on the basis of the pressure in the hydraulic medium, using a stored value for the effective face of the supporting element.

3. A method according to claim 2,
**characterised in**
**that** the coupling moment is calculated using stored values for the friction value and the friction face of the friction coupling (15) and on the basis of the axial force of the actuator (29) and of the supporting force of the supporting element (35) respectively.

4. A method according to any one of claims 1 to 3,
**characterised in**
**that** the pressure in the hydraulic medium is controlled in a closed control circuit by setting the actuator to the respective nominal value.

5. A friction coupling (15) having an electro-mechanical actuator (29), more particularly for being used in a lockable differential drive or in the form of a hang-on coupling for an optionally drivable driving axis of a motor vehicle, wherein the actuator (29) comprises a supporting disc (35) axially fixed in a housing (11) and a displaceable setting disc axially supported on said supporting disc (35),
**characterised in**
**that** the supporting disc (35) is provided in the form of an annular piston in a closed annular chamber (36) filled with a hydraulic medium and that in the housing (11), there is arranged a pressure sensor element (40, 60) for measuring the hydraulic pressure in the annular chamber (36).

6. A coupling according to claim 5,
**characterised in**
**that** the pressure sensor element (40) is connected to a branch channel (37, 39) leading to the annular chamber (36).

7. A coupling according to claim 5,
**characterised in**
**that** the pressure sensor element (60) is directly incorporated in the annular chamber (36).

8. A friction coupling (15) having an electro-mechanical actuator (29), more particularly for being used in a lockable differential drive or in the form of a hang-on coupling for an optionally drivable driving axis of a motor vehicle, wherein the actuator comprises a supporting disc (35) axially fixed in a housing and a displaceable setting disc (34) axially supported on said supporting disc (35),
**characterised in**
**that** the supporting disc (35) is provided in the form of an annular punch and that an annular housing (51) with a cover (54) is inserted into the housing (11), which form a closed annular chamber (36') which is filled with a hydraulic medium and in which there is arranged a pressure sensor element (60) for measuring the hydraulic pressure in the annular chamber (36'), wherein the annular punch acts on the cover (54).

9. A coupling according to claim 7,
**characterised in**
**that** the cover (54) is provided in the form of a flexible membrane.

10. A coupling according to claim 7,
**characterised in**
**that** the cover (54) is displaceable in the annular chamber (36') and sealed relative thereto.

11. A coupling according to any one of claims 5 to 10,
**characterised in**
**that** the supporting disc (35) is sealed relative to the annular chamber (36) by means of sealing rings (52, 53) and that the cover (54) is sealed relative to annular chamber (36') by means of sealing rings (52, 53) respectively.

12. A coupling according to any one of claims 5 to 11,
**characterised in**
**that** the hydraulic medium forms an elastic formed member.

## Revendications

1. Procédé pour déterminer le couple d'embrayage dans un embrayage à friction (15), avec un actionneur électromécanique (29), qui comprend un élément d'appui (35) soutenu en direction axiale dans un boîtier et un élément de réglage (34) déplaçable, s'appuyant sur ce dernier,
**caractérisé en ce que** l'élément d'appui (35) est soutenu dans le boîtier (11) par l'intermédiaire d'un fluide hydraulique, contenu de façon à ne pas pouvoir être chassé et **en ce que** la pression dans le fluide hydraulique est mesurée et utilisée pour le calcul du couple d'embrayage, dans une unité centrale électronique, en utilisant de tableaux de valeurs pour l'actionneur et l'embrayage à friction.

2. Procédé selon la revendication 1,
**caractérisé en ce que** la force axiale de l'actionneur (29), respectivement la force axiale de l'élément d'appui (35) est calculée à partir de la pression dans le fluide hydraulique, en utilisant une valeur mémorisée pour la surface de l'élément d'appui.

3. Procédé selon la revendication 2,
**caractérisé en ce que** le couple d'embrayage est calculé en utilisant des valeurs mémorisées pour la valeur de friction et la surface de friction de l'embrayage à friction (15), à partir de la force axiale de l'actionneur (29) ou de la force d'appui de l'élément d'appui (35).

4. Procédé selon l'une quelconque des revendications 1 à 3,
**caractérisé en ce que** la pression dans le fluide hydraulique est réglée à une valeur de consigne respective dans un circuit fermé, par déplacement de l'actionneur.

5. Embrayage à friction (15), avec un actionneur électromécanique (29), notamment destiné à être utilisé dans un engrenage différentiel ou en tant qu'embrayage "hang-on", pour un essieu d'entraînement d'un véhicule automobile, devant être entraîné en cas de besoin, l'actionneur (29) comprenant une rondelle d'appui (35) fixée en direction axiale dans un boîtier (11) et une rondelle de réglage (34) déplaçable, s'appuyant sur celle-ci en direction axiale,
**caractérisé en ce que** la rondelle d'appui (35) est conçue sous la forme d'un piston annulaire, dans une chambre annulaire (36) fermée, remplie de fluide hydraulique et **en ce qu'**un élément capteur de pression (40, 60) est disposé dans le boîtier (11) pour mesurer la pression hydraulique dans la chambre annulaire (36).

6. Embrayage selon la revendication 5,
**caractérisé en ce que** l'élément capteur de pression (40) est branché sur un conduit de liaison (37, 39), menant à la chambre annulaire (36).

7. Embrayage selon la revendication 5,
**caractérisé en ce que** l'élément capteur de pression (60) est directement enchâssé dans la chambre annulaire (36).

8. Embrayage à friction (15), avec un actionneur (29) électromécanique, notamment destiné à être utilisé dans un engrenage différentiel ou en tant qu'embrayage "hang-on", pour un essieu d'entraînement d'un véhicule automobile, devant être entraîné en cas de besoin, l'actionneur comprenant une rondelle d'appui (35) fixée en direction axiale dans un boîtier et une rondelle de réglage (34) déplaçable, s'appuyant sur celle-ci en direction axiale,
**caractérisé en ce que** la rondelle d'appui (35) est conçue sous la forme d'un poinçon annulaire et **en ce que** dans le boîtier (11) est intégré un boîtier annulaire (51) avec un couvercle (54) qui forment une chambre annulaire (36') fermée, remplie de fluide hydraulique, dans laquelle est disposé un élément capteur de pression (60) pour mesurer la pression hydraulique dans la chambre annulaire (36'), le poinçon annulaire agissant sur le couvercle (54).

9. Embrayage selon la revendication 7,
**caractérisé en ce que** le couvercle (54) est conçu sous la forme d'une membrane flexible.

10. Embrayage selon la revendication 7,
**caractérisé en ce que** le couvercle (54) est déplaçable dans la chambre annulaire (36') et étanche par rapport à celle-ci.

11. Embrayage selon l'une quelconque des revendications 5 à 10,
**caractérisé en ce que** la rondelle d'appui (35) est étanchéifiée par rapport à la chambre annulaire (36) respectivement le couvercle (54) est étanchéifié par rapport à la chambre annulaire (36') au moyen de bagues d'étanchéité (52, 53).

12. Embrayage selon l'une quelconque des revendications 5 à 11,
**caractérisé en ce que** le fluide hydraulique forme un corps moulé élastique.
